# EUROPEAN PATENT SPECIFICATION

(11) **EP 4 249 757 B1**
(45) Date of publication and mention of the grant of the patent: **07.01.2026**
(21) Application number: 22305371.1
(22) Date of filing: 25.03.2022
(51) Int. Cl.: F16B 1/00, F16B 2/24, F16B 2/22

(54) **EDGE CLIP**
KANTENCLIP
PINCE DE BORD

(43) Date of publication of application: 27.09.2023
(73) Proprietor: Nexans, 92400 Courbevoie (FR)
(72) Inventor: GRUBE, Andreas, 81379 Munich (DE); KARAS, Robert, 81927 Munich (DE); SEGERER, Stefan, 92421 Schwandorf (DE); REICH, Alexander, 92637 Weiden (DE); SCHROEER, Frank, 92637 Weiden (DE); TEICHER, Hermann, 92702 Kohlberg (DE); KRAETZ, Josef, 80809 Munich (DE); SCHREINER, Frank, 80809 Munich (DE)
(74) Representative: Ipsilon

(56) References cited:
- EP-A1- 3 978 767
- US-A- 5 713 707
- US-B2- 9 453 523

## Description

### FIELD

The present invention relates to fixing means, in particular to edge clips, i.e., clips that are mounted on protruding edges of structures.

### BACKGROUND

Media-carrying or electrical lines are used in all industrial domains. In many applications these media-carrying or electrical lines must be securely attached to a mechanical structure in specific ways and/or along predetermined paths and installation positions. Such attachment can be achieved by using ducts or clamps. Ducts may be assembled from standard parts that are combined along a desired path, or may be parts that have a specific shape which is adapted to the structure they are attached to. Specifically shaped parts are comparatively expensive by themselves, and any change thereto, e.g., for adding or modifying an attachment point, further significantly increases the cost. Clamps may provide a less expensive alternative.

Some applications require a verifiable proof of proper fixation or attachment of a media-carrying or electrical line. While a specifically shaped duct may provide such proof by design, clamps require additional process steps to fulfil the requirement, e.g., optical inspection by machine or a supervisor. So far, only clamps fixed by screws are considered compliant with the verifiable-proof requirement.

However, depending on the installation position of a clamp, an optical or other type of inspection of the correct mounting of a clamp may not always be possible, e.g., due to its installation position. Further, fixing clamps by screws requires a corresponding hole in the structure, which may weaken the structure and may compromise coatings such as anti-corrosion coatings and the like.

Clamps may be mounted with edge clips, which normally do not weaken a structure they are attached to, and may be designed so as not to compromise coatings. However, there is currently no process that provides a verifiable proof of proper fixation of an edge clip.

### SUMMARY OF THE INVENTION

It is, thus, desirable to provide an edge clip assembly that enables providing verifiable proof of proper fixation or installation.

This object is achieved by the edge clip assembly of claim 1 and of claim 2. Advantageous embodiments and developments are provided in the dependent claims.

An edge clip of the assembly according to the invention has opposite first and second legs interconnected by a bridge. The edge clip assembly further comprises a verification means for verifying correct mounting of the edge clip on an edge or rib. The verification means can only be brought into an end position which indicates correct mounting of the edge clip on the edge or rib, and/or which is visible or tangible only when the first and second legs of the edge clip overlap the edge or rib for a predetermined minimum distance. Additionally, or alternatively, the verification means forces the edge clip into a correct mounting position on the edge or rib when the verification means is being brought into the end position indicating correct mounting of the edge clip on the edge or rib.

The verification means may provide a visual, tactile or haptic feedback of the correct mounting of the edge clip. Haptic feedback may be provided by a resistive force occurring when the verification means is in the end position. The resistive force may be a resistive torque or a hard abutment. Alternatively, haptic or tactile feedback may be provided by a surface of a push pin being flush with a surrounding area when the edge clip assembly is correctly mounted on the edge or rib. The push pin may also provide audible feedback when reaching its end position, e.g., when a snap hook engages.

In a first variant of the edge clip assembly a bore hole extends from the bridge parallel to the first leg. The bore hole, which is open to the inside of the first leg, is adapted to receive a verification means. The verification means may engage with the side wall of the edge or rib or a structure formed therein.

In a second variant of the edge clip assembly a bore hole adapted to receive a verification means extends from the bridge parallel to the first leg. The edge clip further comprises a pivotable part having a first section protruding into the space between the first and second legs of the edge clip, and further having a second section with a structure that is adapted to receive a part of the verification means. The first section is arranged to engage with a rim of an edge when the edge clip is mounted thereon, and to pivot the pivotable part while the edge clip is brought into a correct mounting position. The structure of the second part is pivoted into alignment with the bore hole when the edge clip is in a correct mounting position, and permits the receiving the part of the verification means in this position. The pivotable part may further be adapted to prevent bringing the verification means into an end position indicating correct mounting of the edge clip while the edge clip is not in a correct mounting position. This may, for example, be achieved by a blocking element that engages with the edge or rib and permits movement, in particular a rotation, of the verification means into the end position unless the edge clip is brought into a correct mounting position. The pivotable part may be an integral part of the edge clip.

The verification means may be a screw or a push rivet.

In one or more embodiments the thread of a screw as verification means may engage with the side wall of the edge or rib through the opening in the bore hole, and may provide haptic feedback when the head of the screw abuts against the bridge, which corresponds to the end position of the verification means. The screw may also force the edge clip into the correct mounting position, and provide haptic feedback only when reaches the end position. The haptic feedback in this case may be a blocking of further turns of the screw.

In one or more embodiments with a push rivet as verification means the push rivet may have a protrusion that is arranged on an outer surface of a flexible outer section of the push rivet. When the edge clip is properly positioned on the edge or rib, the protrusion of the push rivet may be pushed outwards, through the opening in the bore hole, into a recess in the edge or rib by a push pin pushing a part of the outer section outwards. This will only be possible when the edge clip is in a correct mounting position, and the push pin will only attain a flush position with a surrounding area when it can be fully pushed into the push rivet.

In one or more embodiments of the edge clip assembly the edge clip and/or the verification means is made from plastic.

In one or more embodiments of the edge clip assembly a metal bracket is inserted between the opposite first and second legs. The metal bracket has protruding sections which resist a movement of the edge clip against an insertion direction. To this end the protruding sections may be resilient and protrude obliquely so as to allow and facilitate insertion and to provide some resistance against removal, e.g., by cutting into the edge or rib and locking within the cut when the edge clip is moved in a removal direction. The pivotable part may be an integral part of the metal bracket.

The edge clip assembly in accordance with the invention provides a verifiable proof of correct installation, while being a less costly alternative to pre-formed cable ducts. The mounting process is significantly simplified over pre-formed cable ducts and classic clamps that are fixed by screws. It consists essentially of two steps: pushing the edge clip onto an edge or rib until the edge clip reaches a correct mounting position, and operating the verification means to bring it into an end position. Applications of the inventive edge clip assembly include, but are not limited to automotive, aerospace and the like.

Various attachments, e.g., cable clamps, openings for attaching cable straps and the like, may be added to the edge clip assembly in a generally known manner, e.g., by moulding the attachment together with the edge clip, or by attaching it to an attachment structure provided on the edge clip.

### BRIEF DESCRIPTION OF THE DRAWINGS

In the following section the invention will be discussed with reference to the drawings, in which
- Fig. 1: shows an exemplary prior art edge clip with a cable clamp,
- Fig. 2: shows an exemplary edge clip assembly according to a first embodiment of the invention,
- Fig. 3: shows a see-through drawing of the exemplary edge clip assembly of figure 2,
- Fig. 4: shows a drawing of the exemplary edge clip assembly of figure 2 mounted on an edge or rib,
- Fig. 5: shows a picture of the exemplary edge clip assembly of figure 2 mounted on an edge or rib,
- Fig. 6: shows a picture of the edge or rib after removing the edge clip assembly of figure 2,
- Fig. 7: shows an exemplary edge clip of an edge clip assembly according to a second embodiment of the invention,
- Fig. 8: shows a detail of the edge clip of figure 7,
- Fig. 9: shows the edge clip of figure 7 with a pivotable part in a position permitting inserting the verification means,
- Fig. 10: shows pictures of a first variant of the edge clip of figure 7,
- Fig. 11: shows pictures of a second variant of the edge clip of figure 7, and
- Fig. 12: shows an exemplary edge clip assembly according to a third embodiment, which does not fall under the wording of the claims.

In the figures, identical or similar elements may be referenced by the same reference designators.

### DETAILED DESCRIPTION OF EMBODIMENTS

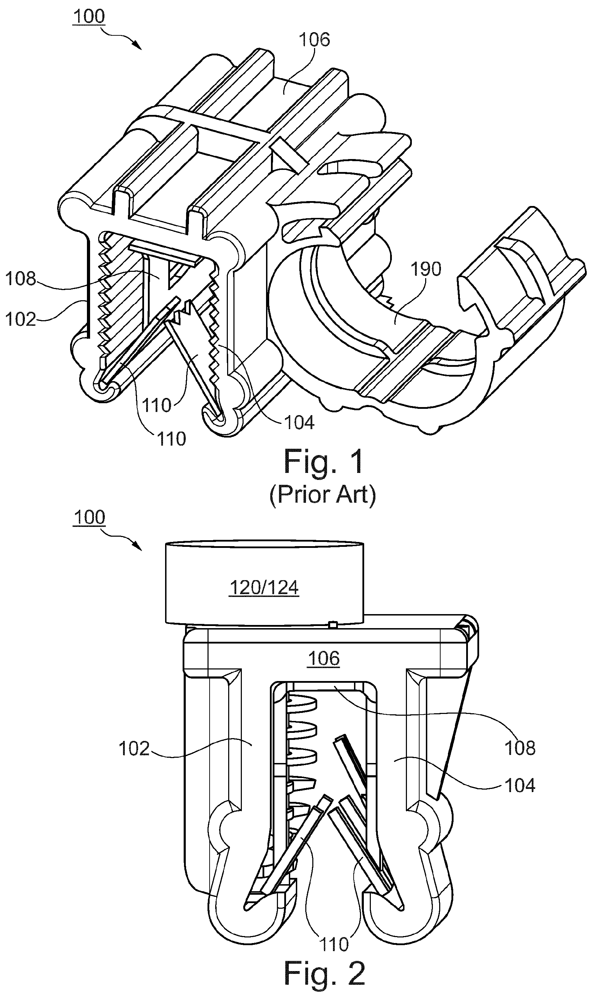

Figure 1 shows an exemplary prior art edge clip 100 with a cable clamp 190. Edge clip 100 has opposite first and second legs 102, 104, which are interconnected by a bridge 106. A metal bracket 108 is inserted between the first and second legs 102, 104 of the edge clip 100. Metal bracket 108 has protruding sections 110, which engage with an edge (not shown) when the edge clip 100 is installed thereon. Cable clamp 190 is moulded onto the second leg 104 of the edge clip.

Figure 2 shows an exemplary edge clip assembly according to a first embodiment of the invention. Edge clip 100 has opposite first and second legs 102, 104, which are interconnected by a bridge 106. A metal bracket 108 is inserted between the first and second legs 102, 104 of the edge clip 100. Metal bracket 108 has protruding sections 110, which engage with an edge (not shown) when the edge clip 100 is installed thereon. A bore hole (not visible in the figure) extends from the bridge 106 parallel to the first leg 102. The bore hole is open to the inside of the first leg 102. A verification means 120, here a screw 124, is received in the bore hole, and the thread of the screw 124 protrudes through the opening of the bore hole on the inside of the first leg 102. The thread may engage with a side wall of an edge (not shown in the figure), when the edge clip is mounted on the edge. The screw 124 serves as verification means when the screw head abuts the top side of the bridge and cannot turn any further. Verification may be had by a torque exceeding a pre-set value. If the edge clip 100 is initially not correctly mounted on the edge, turning the screw will force the edge clip further onto the edge, until the edge clip 100 is correctly mounted.

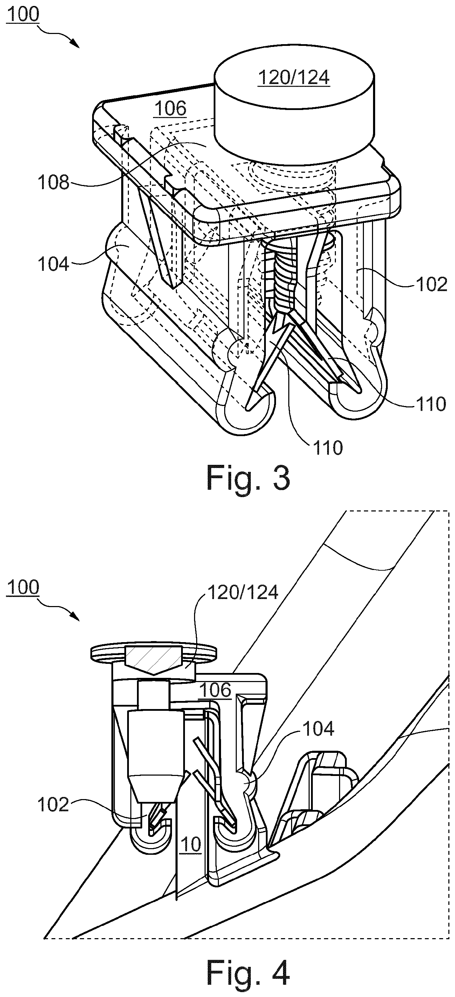

Figure 3 shows a see-through drawing of the exemplary edge clip assembly of figure 2. The elements shown in the figure correspond to those shown and discussed with reference to figure 2.

Figure 4 shows a drawing of the exemplary edge clip assembly of figure 2 mounted on an edge or rib 10. The drawing shows in particular how the thread of screw 124 engages with a side wall of the edge or rib 10.

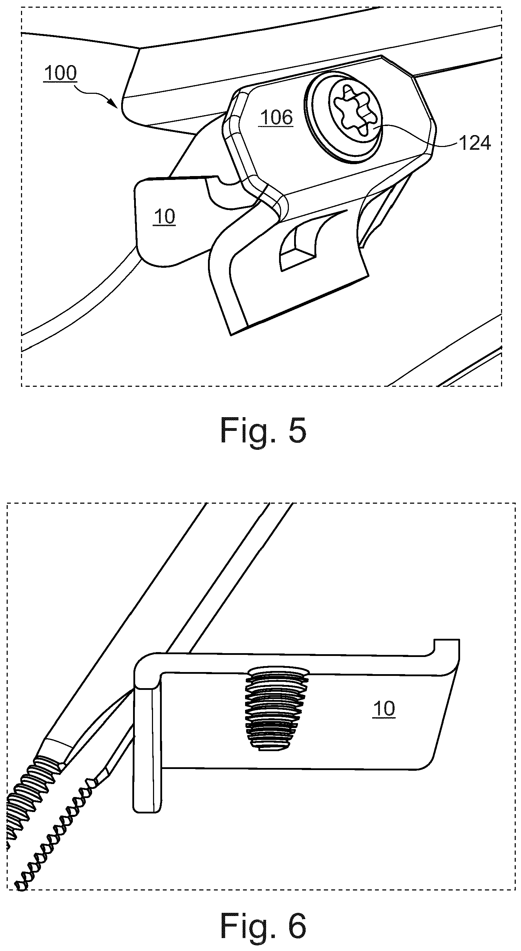

Figure 5 shows a picture of the exemplary edge clip assembly of figure 2 mounted on an edge or rib 10. Screw 124 is turned tight and the increasing torque when the screw head abuts the top side of bridge 106 of edge clip 100 can be used as a verifiable proof that the edge clip 100 is securely and correctly mounted on edge or rib 10.

Figure 6 shows a picture of the edge after removing the edge clip assembly of figure 2. The marks left behind on a side wall of edge or rib 10 by the thread of screw 124 are clearly visible.

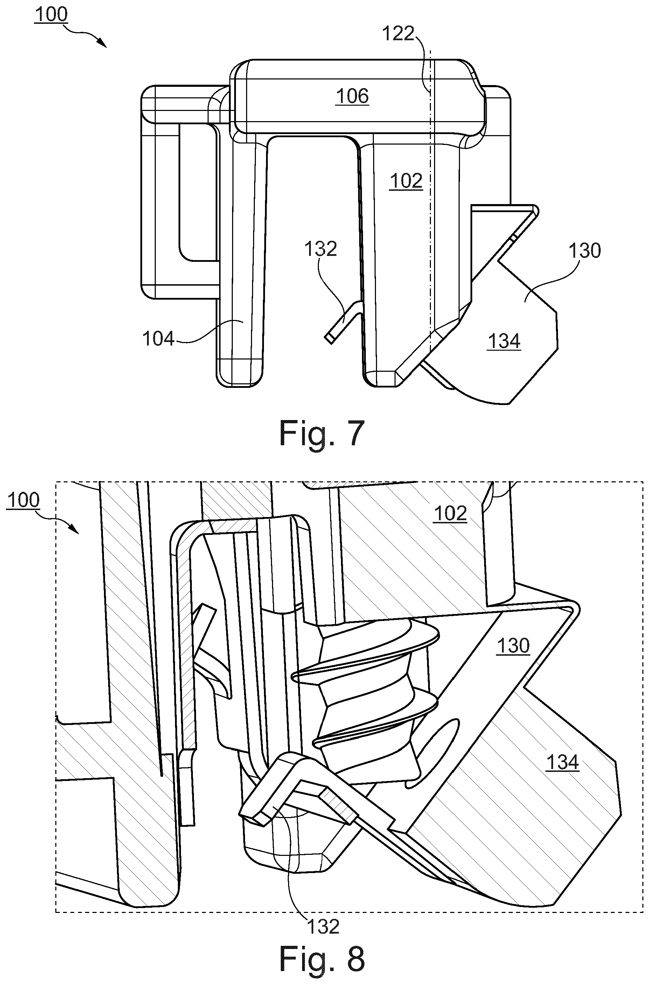

Figure 7 shows an exemplary edge clip 100 of an edge clip assembly according to a second embodiment of the invention. Edge clip 100 has opposite first and second legs 102, 104, which are interconnected by a bridge 106. A bore hole 122, not visible in the figure but indicated by the dash-dotted line, extends from the bridge 106 parallel to the first leg 102. A pivotable part 130 is attached to the first leg 102. Pivotable part 130 has a first section 132 that protrudes into the space between the first and the second legs 102, 104. A second section 134 of the pivotable part 130 has a structure that is adapted to receive a part of the verification means 120, here a screw (not shown in the figure), when the first section 132 of the pivotable part 130 has engaged with a rim of an edge (not shown in the figure) when the edge clip 100 is mounted thereon and has been brought into the correct mounting position.

Figure 8 shows a detail of the edge clip 100 of figure 7. This detail shows a thread of a screw 124 representing the verification means 120 that cannot engage with the structure of the second section 134, here a bore hole, because the pivotable part 130 is not pivoted into a suitable position, e.g., because the edge clip 100 is not correctly mounted on the edge (not shown in the figure). A verifiable proof of correct mounting of the edge clip 100 on an edge can be had when the screw 124 can be inserted into the structure of the second section 134 of pivotable part 130 and is turned tight therein.

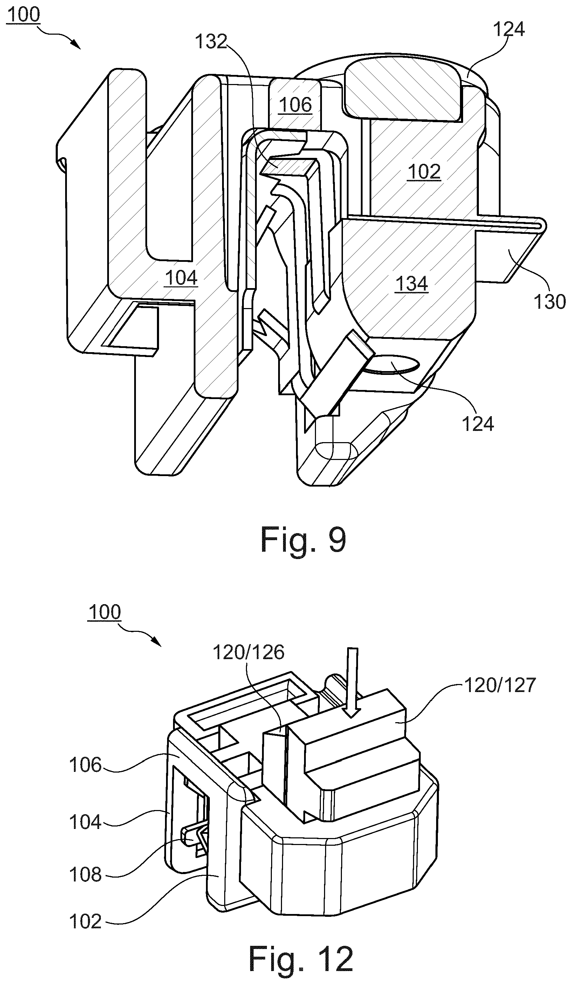

Figure 9 shows a sectional view of the edge clip 100 of figure 7 with the pivotable part 130 in a position permitting inserting the verification means 120, e.g., screw 124. The figure shows how the thread of screw 124, of which only a part of the head and the very tip of the threaded part is visible, has been inserted into the structure of the second section 134 of pivotable part 130, and has been turned tight.

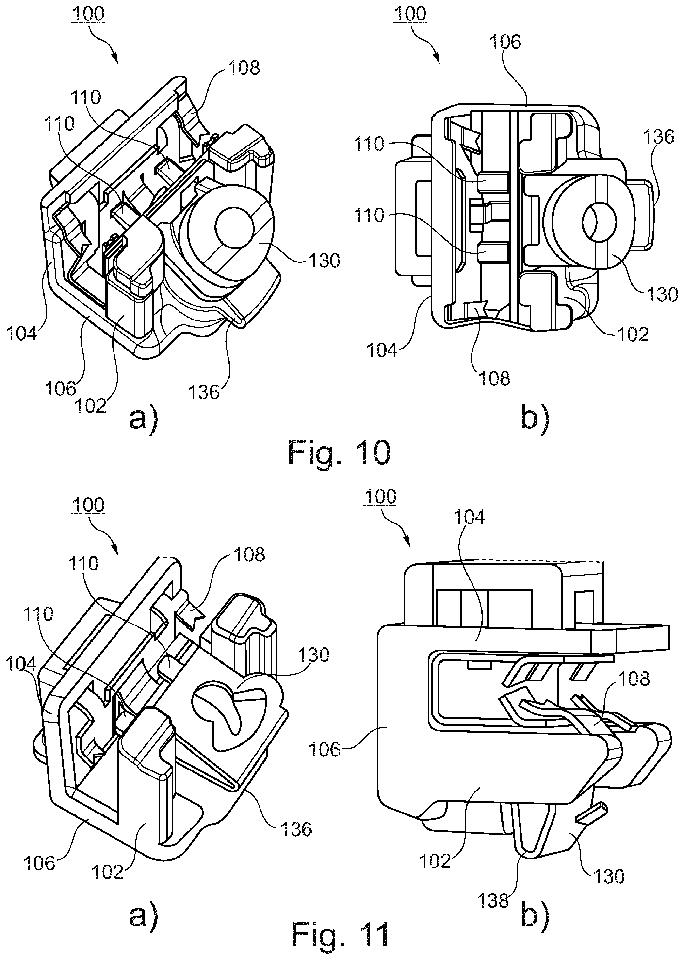

Figure 10 a) and b) each shows a picture of a first variant of the edge clip 100 of figure 7. The pivotable part 130 is moulded in one piece with the bridge 106 and the first and second legs 102, 104, and is pivotable around a film hinge 136. Two prongs 110 of the first section extend into the space between the first and second legs 102, 104, and a metal bracket 108 is inserted there.

Figure 11 a) and b) each shows a picture of a second variant of the edge clip 100 of figure 7. The pivotable part 130 is formed as a part of metal bracket 108, which is inserted into the space between the first and second legs 102, 104. The pivotable part 130 is resiliently pivotable around the bend 138. Two prongs 110 of the first section extend into the space between the first and second legs 102, 104.

Figure 12 shows an exemplary edge clip assembly according to a third embodiment.

The edge clip has first and second legs 102, 104, which are interconnected by a bridge 106. A metal bracket 108 is inserted into the space between the first and second legs 102, 104. The verification means 120 comprises a first part 126, which may be fixed, and a second part 127, which may be movable. The second part 127 may be pushed in the insertion direction of the edge clip 100, indicated by the arrow, only when the edge clip 100 is correctly mounted on the edge or rib 10. A step that is present between the first part 126 and the second part 127 as long as the second part 127 is not yet pushed in the insertion direction of the edge clip 100 provides a visible and haptic feedback.

### LIST OF REFERENCE NUMERALS (PART OF THE DESCRIPTION)

- 10: edge/rib
- 100: edge clip
- 102: first leg
- 104: second legs
- 106: bridge
- 108: metal bracket
- 110: protruding section
- 120: verification means
- 122: bore hole
- 124: screw
- 126: first part
- 127: second part
- 130: pivotable part
- 132: first section
- 134: second section
- 136: film hinge
- 190: cable clamp

## Claims

1. Edge clip assembly for mounting on an edge or rib (10) comprising an edge-clip (100) and a verification means (120, 124), the edge clip (100) having opposite first and second legs (102, 104) interconnected by a bridge (106), the edge clip being adapted to cooperate with the verification means (120) for verifying correct mounting of the edge clip (100) on an edge or rib (10), which verification means (120) forces the edge clip (100) into a correct mounting position when the verification means (120) is being brought into an end position, wherein a bore hole (122) extends from the bridge (106) parallel to the first leg (102), the bore hole (122) being adapted to receive the verification means (120), wherein the bore hole (122) is open to the inside of the first leg (102), permitting the verification means to engage with a side wall of the edge or rib (10) or a structure formed therein.

2. Edge clip assembly for mounting on an edge or rib (10) comprising an edge-clip (100) and a verification means (120, 124), the edge clip (100) having opposite first and second legs (102, 104) interconnected by a bridge (106), the edge clip being adapted to cooperate with the verification means (120) for verifying correct mounting of the edge clip (100) on an edge or rib (10), which verification means (120) can only be brought into an end position which indicates correct mounting of the edge clip (100) when the first and second legs (102, 104) of the edge clip (100) overlap the edge (10) for a predetermined minimum distance, wherein a bore hole (122) extends from the bridge (106) parallel to the first leg (102), the bore hole (122) being adapted to receive the verification means (120), the edge clip (100) further comprising a pivotable part (130), the pivotable part having a first section (132) protruding into the space between the first and second legs (102, 104), and further having a second section (134) with a structure that is adapted to receive a part of the verification means (120), wherein the first section (132) is arranged to engage with a rim of an edge or rib (10) when the edge clip (100) is mounted thereon, and to pivot the pivotable part (130) while the edge clip (100) is brought into a correct mounting position, and wherein the structure of the second part (134) is pivoted into alignment with the bore hole when the edge clip (100) is in a correct mounting position.

3. Edge clip assembly according to claim 2, wherein the pivotable part (130) is adapted to prevent bringing the verification means (120) into an end position indicating correct mounting of the edge clip (100) while the edge clip (100) is not in a correct mounting position.

4. Edge clip assembly according to claim 2, wherein the pivotable part (130) is an integral part of the edge clip (100).

5. Edge clip assembly according to any one of claims 2 to 4, wherein the verification means (120) is a push rivet.

6. Edge clip assembly according to any one of claims 1 to 4, wherein the verification means (120) is a screw (124).

7. Edge clip assembly according to any one of the preceding claims, wherein the edge clip (100) and/or the verification means (120) is made from plastic.

8. Edge clip assembly according to any one of the preceding claims, further having a metal bracket (108) inserted between the opposite legs (102, 104), wherein the metal bracket (108) has protruding sections (110) which resist a movement of the edge clip (100) against an insertion direction.

9. Edge clip assembly according to claim 8, wherein the pivotable part (130) is an integral part of the bracket (108).

10. Method of mounting an edge clip assembly, comprising an edge-clip (100) and a verification means (120, 124), according to any one of the preceding claims, comprising:
- pushing the edge clip (100) onto an edge or rib (10) until the edge clip (100) reaches a correct mounting position,
- operating the verification means (120) to bring it into an end position.

## Patentansprüche

1. Kantenclipanordnung zur Montage an einer Kante oder Rippe (10), die einen Kantenclip (100) und ein Prüfmittel (120, 124) umfasst, wobei der Kantenclip (100) gegenüberliegende erste und zweite Schenkel (102, 104) aufweist, die durch eine Brücke (106) miteinander verbunden sind, wobei der Kantenclip dazu ausgelegt ist, mit dem Prüfmittel (120) zusammenzuwirken, um eine korrekte Montage des Kantenclips (100) an einer Kante oder Rippe (10) zu prüfen, wobei das Prüfmittel (120) den Kantenclip (100) in eine korrekte Montageposition zwingt, wenn das Prüfmittel (120) in eine Endposition gebracht wird, wobei sich ein Bohrloch (122) von der Brücke (106) parallel zu dem ersten Schenkel (102) erstreckt, wobei das Bohrloch (122) dazu ausgelegt ist, das Prüfmittel (120) aufzunehmen, wobei das Bohrloch (122) zur Innenseite des ersten Schenkels (102) offen ist, was ermöglicht, dass das Prüfmittel mit einer Seitenwand der Kante oder Rippe (10) oder einer darin ausgebildeten Struktur in Eingriff kommt.

2. Kantenclipanordnung zur Montage an einer Kante oder Rippe (10), die einen Kantenclip (100) und ein Prüfmittel (120, 124) umfasst, wobei der Kantenclip (100) gegenüberliegende erste und zweite Schenkel (102, 104) aufweist, die durch eine Brücke (106) miteinander verbunden sind, wobei der Kantenclip dazu ausgelegt ist, mit dem Prüfmittel (120) zusammenzuwirken, um eine korrekte Montage des Kantenclips (100) an einer Kante oder Rippe (10) zu prüfen, wobei das Prüfmittel (120) nur dann in eine Endposition gebracht werden kann, die die korrekte Montage des Kantenclips (100) anzeigt, wenn der erste und der zweite Schenkel (102, 104) des Kantenclips (100) die Kante (10) um einen vorbestimmten Mindestabstand überlappen, wobei sich ein Bohrloch (122) von der Brücke (106) parallel zu dem ersten Schenkel (102) erstreckt, wobei das Bohrloch (122) dazu ausgelegt ist, das Prüfmittel (120) aufzunehmen, wobei der Kantenclip (100) ferner einen schwenkbaren Teil (130) umfasst, wobei der schwenkbare Teil einen ersten Abschnitt (132) aufweist, der in den Raum zwischen dem ersten und dem zweiten Schenkel (102, 104) vorsteht, und ferner einen zweiten Abschnitt (134) mit einer Struktur aufweist, die dazu ausgelegt ist, einen Teil des Prüfmittels (120) aufzunehmen, wobei der erste Abschnitt (132) dazu angeordnet ist, mit einem Rand einer Kante oder Rippe (10) in Eingriff zu kommen, wenn der Kantenclip (100) daran montiert ist, und den schwenkbaren Teil (130) zu schwenken, während der Kantenclip (100) in eine korrekte Montageposition gebracht wird, und wobei die Struktur des zweiten Teils (134) in eine Ausrichtung mit dem Bohrloch geschwenkt ist, wenn sich der Kantenclip (100) in einer korrekten Montageposition befindet.

3. Kantenclipanordnung nach Anspruch 2, wobei der schwenkbare Teil (130) dazu ausgelegt ist, zu verhindern, dass das Prüfmittel (120) in eine Endposition gebracht wird, die eine korrekte Montage des Kantenclips (100) anzeigt, während sich der Kantenclip (100) nicht in einer korrekten Montageposition befindet.

4. Kantenclipanordnung nach Anspruch 2, wobei der schwenkbare Teil (130) ein integraler Teil des Kantenclips (100) ist.

5. Kantenclipanordnung nach einem der Ansprüche 2 bis 4, wobei das Prüfmittel (120) ein Druckniet ist.

6. Kantenclipanordnung nach einem der Ansprüche 1 bis 4, wobei das Prüfmittel (120) eine Schraube (124) ist.

7. Kantenclipanordnung nach einem der vorhergehenden Ansprüche, wobei der Kantenclip (100) und/oder das Prüfmittel (120) aus Kunststoff besteht.

8. Kantenclipanordnung nach einem der vorhergehenden Ansprüche, die ferner einen Metallbügel (108) aufweist, der zwischen den gegenüberliegenden Schenkeln (102, 104) eingesetzt ist, wobei der Metallbügel (108) vorstehende Abschnitte (110) aufweist, die einer Bewegung des Kantenclips (100) entgegen einer Einsetzrichtung widerstehen.

9. Kantenclipanordnung nach Anspruch 8, wobei der schwenkbare Teil (130) ein integraler Teil des Bügels (108) ist.

10. Verfahren zum Montieren einer Kantenclipanordnung, die einen Kantenclip (100) und ein Prüfmittel (120, 124) umfasst, nach einem der vorhergehenden Ansprüche, das Folgendes umfasst:
- Drücken des Kantenclips (100) auf eine Kante oder Rippe (10), bis der Kantenclip (100) eine korrekte Montageposition erreicht,
- Betätigen des Prüfmittels (120), um es in eine Endposition zu bringen.

## Revendications

1. Ensemble de clip de bord destiné à être monté sur un bord ou une nervure (10), comprenant un clip de bord (100) et un moyen de vérification (120, 124), le clip de bord (100) étant pourvu de première et deuxième pattes (102, 104) opposées reliées entre elles par un pont (106), le clip de bord étant adapté à coopérer avec le moyen de vérification (120) pour vérifier le montage correct du clip de bord (100) sur un bord ou une nervure (10), lequel moyen de vérification (120) contraint le clip de bord (100) à une position de montage correcte lorsque le moyen de vérification (120) est amené dans une position finale, un trou d'alésage (122) s'étendant depuis le pont (106) parallèlement à la première patte (102), le trou d'alésage (122) étant adapté à recevoir le moyen de vérification (120), le trou d'alésage (122) étant ouvert vers l'intérieur de la première patte (102) pour permettre au moyen de vérification d'entrer en prise avec une paroi latérale du bord ou de la nervure (10) ou avec une structure qui y est formée.

2. Ensemble de clip de bord destiné à être monté sur un bord ou une nervure (10), comprenant un clip de bord (100) et un moyen de vérification (120, 124), le clip de bord (100) étant pourvu de première et deuxième pattes (102, 104) opposées reliées entre elles par un pont (106), le clip de bord étant adapté à coopérer avec le moyen de vérification (120) pour vérifier le montage correct du clip de bord (100) sur un bord ou une nervure (10), lequel moyen de vérification (120) ne peut être amené dans une position finale indiquant un montage correct du clip de bord (100) que lorsque les première et deuxième pattes (102, 104) du clip de bord (100) chevauchent le bord (10) sur une distance minimale prédéterminée, un trou d'alésage (122) s'étendant depuis le pont (106) parallèlement à la première patte (102), le trou d'alésage (122) étant adapté à recevoir le moyen de vérification (120), le clip de bord (100) comprenant en outre une partie pivotante (130), la partie pivotante étant pourvue d'une première section (132) faisant saillie jusque dans l'espace entre les première et deuxième pattes (102, 104), et étant pourvue en outre d'une deuxième section (134) possédant une structure adaptée à recevoir une partie du moyen de vérification (120), la première section (132) étant agencée de manière à entrer en prise avec un rebord d'un bord ou d'une nervure (10) lorsque le clip de bord (100) y est monté, et à faire pivoter la partie pivotante (130) tandis que le clip de bord (100) est amené dans une position de montage correcte, et la structure de la deuxième partie (134) pivotant en alignement avec le trou d'alésage lorsque le clip de bord (100) occupe une position de montage correcte.

3. Ensemble de clip de bord selon la revendication 2, dans lequel la partie pivotante (130) est adaptée à empêcher l'amenée du moyen de vérification (120) dans une position finale indiquant un montage correct du clip de bord (100) tant que le clip de bord (100) n'occupe pas une position de montage correcte.

4. Ensemble de clip de bord selon la revendication 2, dans lequel la partie pivotante (130) fait partie intégrante du clip de bord (100).

5. Ensemble de clip de bord selon l'une quelconque des revendications 2 à 4, dans lequel le moyen de vérification (120) est un rivet à pression.

6. Ensemble de clip de bord selon l'une quelconque des revendications 1 à 4, dans lequel le moyen de vérification (120) est une vis (124).

7. Ensemble de clip de bord selon l'une quelconque des revendications précédentes, dans lequel le clip de bord (100) et/ou le moyen de vérification (120) sont en plastique.

8. Ensemble de clip de bord selon l'une quelconque des revendications précédentes, pourvu en outre d'un étrier métallique (108) inséré entre les pattes (102, 104) opposées, l'étrier métallique (108) étant pourvu de sections saillantes (110) qui s'opposent à un mouvement du clip de bord (100) dans le sens inverse d'une direction d'insertion.

9. Ensemble de clip de bord selon la revendication 8, dans lequel la partie pivotante (130) fait partie intégrante de l'étrier (108).

10. Procédé de montage d'un ensemble de clip de bord, comprenant un clip de bord (100) et un moyen de vérification (120, 124), selon l'une quelconque des revendications précédentes, comprenant :
- l'enfoncement du clip de bord (100) sur un bord ou une nervure (10) jusqu'à ce que le clip de bord (100) atteigne une position de montage correcte,
- l'actionnement du moyen de vérification (120) pour l'amener dans une position finale.
